# EUROPÄISCHE PATENTSCHRIFT

(11) **EP 2 238 877 B1**
(45) Veröffentlichungstag und Bekanntmachung des Hinweises auf die Patenterteilung: **17.10.2012**
(21) Anmeldenummer: 10155802.1
(22) Anmeldetag: 08.03.2010
(51) Int. Cl.: A47J 31/08

(54) **Filterpapiereinsatz**
Filter paper insert
Utilisation de papier à filtre

(30) Priorität: 06.04.2009 DE 202009002039 U
(43) Veröffentlichungstag der Anmeldung: 13.10.2010
(73) Patentinhaber: MELITTA HAUSHALTSPRODUKTE GmbH & Co. Kommanditgesellschaft, D-32427 Minden (DE)
(72) Erfinder: Freiheit, Joachim, 32479 Hille (DE); Weber, Michael, 32425 Minden (DE)
(74) Vertreter: Dantz, Jan Henning

(56) Entgegenhaltungen:
- DE-U1- 29 805 673
- DE-U1-202007 016 661

## Beschreibung

Die vorliegende Erfindung betrifft einen Filterpapiereinsatz, insbesondere für Kaffee, mit einem befüllbaren Innenraum, der von Seitenwänden umgeben ist, wie aus dem Dokument DE 298 05 673 U bekannt.

Es sind Filterpapiereinsätze bekannt, die im Wesentlichen kegelstumpfförmig ausgebildet sind und zwei Seitenwände umfassen. Die Seitenwände sind über eine Faltkante, eine Seitennaht und eine Bodennaht miteinander verbunden. Solche Filterpapiereinsätze haben sich an sich bewährt, da sie einfach mit Kaffeemehl oder Tee zu befüllen sind und dann nach dem Gebrauch entsorgt werden. Die Handhabung der Filterpapiereinsätze ist einfach, wobei aufgrund der Wahl des Filtermaterials die Filterwirkung und die Filterzeit durch den Strömungswiderstand des Filtermaterials vorgegeben sind. Es ist nicht möglich, die Filterleistung an unterschiedliche Einsatzzwecke anzupassen.

Es ist daher Aufgabe der vorliegenden Erfindung, einen Filterpapiereinsatz zu schaffen, der einfach in der Handhabung ist und an unterschiedliche Filterzwecke angepasst werden kann.

Diese Aufgabe wird mit einem Filterpapiereinsatz mit den Merkmalen des Anspruchs 1 gelöst.

Erfindungsgemäß umfasst der Filterpapiereinsatz Seitenwände, die mindestens zwei Lagen aus Filtermaterial aufweisen. Dadurch kann der Benutzer wahlweise beide Lagen bei der Herstellung eines Filtrationsgetränks verwenden, oder eine Lage kann entfernt werden, so dass der Strömungswiderstand verringert ist und dadurch die Filterzeit verringert wird. Dies verändert einerseits die Filterzeit und andererseits können die Filtergetränke geschmacklich besser differenziert werden. Zudem können auch unterschiedliche Filtrationsextrakte in den Filterpapiereinsatz eingegeben werden, beispielsweise unterschiedliche Sorten von Kaffee und/oder Tee.

Gemäß einer bevorzugten Ausgestaltung der Erfindung sind die Lagen aus Filtermaterial an einer Naht miteinander fest verbunden. Dadurch wird die einfache Handhabung gewährleistet, da die mindestens zwei Lagen aus Filtermaterial wie eine einzige Lage gehandhabt werden können und fest zueinander durch die Verbindung an der Naht positioniert sind. Die Naht kann dabei als Bodennaht und Seitennaht ausgebildet sein. Vorzugsweise liegen die Lagen aus Filtermaterial außerhalb der Naht lose aufeinander, so dass auf einfache Weise ein Bewegen der einzelnen Lagen aus Filtermaterial möglich ist. Beispielsweise kann der Filterpapiereinsatz so befüllt werden, dass auf einer Seite drei oder mehr Lagen aus Filtermaterial und auf der gegenüberliegenden Seite nur eine Lage Filtermaterial angeordnet ist. Dann wird der Strömungswiderstand auf der Seite mit nur einer Lage aus Filtermaterial deutlich minimiert.

Gemäß einer weiteren Ausgestaltung der Erfindung sind die Lagen aus Filtermaterial aus unterschiedlichen Materialien gebildet. Die Lagen aus Filtermaterial können insbesondere aus unterschiedlichen Filterpapieren, aber auch aus Vliesstoffen, Folien oder anderen Materialien hergestellt sein. Zudem können die Lagen aus Filtermaterial Perforationen, Markierungen oder andere Elemente aufweisen. Die Lagen aus Filtermaterial können zudem farblich voneinander abgesetzt sein, so dass der Benutzer einfach erkennt, welche Lagen aus Filtermaterial bei der Befüllung verwendet werden. Zudem können die Lagen eine unterschiedliche Dicke aufweisen, beispielsweise kann die innere Lage aus Filtermaterial dünner ausgebildet sein als eine äußere Lage. Auch die Größe der Filterlagen kann voneinander abweichen, so dass eine innere Lage aus Filterpapier für die Aufnahme einer kleineren Menge an Kaffeemehl geeignet ist, während bei einer größeren Brühmenge die innere Lage aus Filtermaterial weggeklappt wird und ein größerer Innenraum zur Befüllung zur Verfügung steht.

Vorzugsweise sind zwei Lagen aus Filtermaterial vorgesehen. Es ist natürlich auch möglich, die Seitenwände aus drei oder mehr Lagen aus Filtermaterial herzustellen. Die Lagen aus Filtermaterial können dabei auch als Grobfilter und Feinfilter verwendet werden.

Die Erfindung wird nachfolgend anhand eines Ausführungsbeispieles mit Bezug auf die beigefügten Zeichnungen näher erläutert. Es zeigen:
- Figur 1: eine Draufsicht auf einen erfindungsgemäßen Filterpapiereinsatz;
- Figur 2: eine geschnittene Detailansicht des Filterpapiereinsatzes der Figur 1.

Ein Filterpapiereinsatz 1 umfasst zwei Seitenwände, die im Wesentlichen kegelstumpfförmig ausgebildet sind und seitlich an einer Seitennaht 3, insbesondere einer Prägenaht, fest miteinander verbunden sind. Ferner sind die Seitenwände 2 an einer Bodennaht 4 und einer Faltkante 5 miteinander verbunden. Auf der zur Bodennaht 4 gegenüberliegenden Seite sind die Seitenwände also auseinanderziehbar, damit ein Innenraum mit Kaffee, Tee oder anderen Filtrationsextrakten befüllt werden kann.

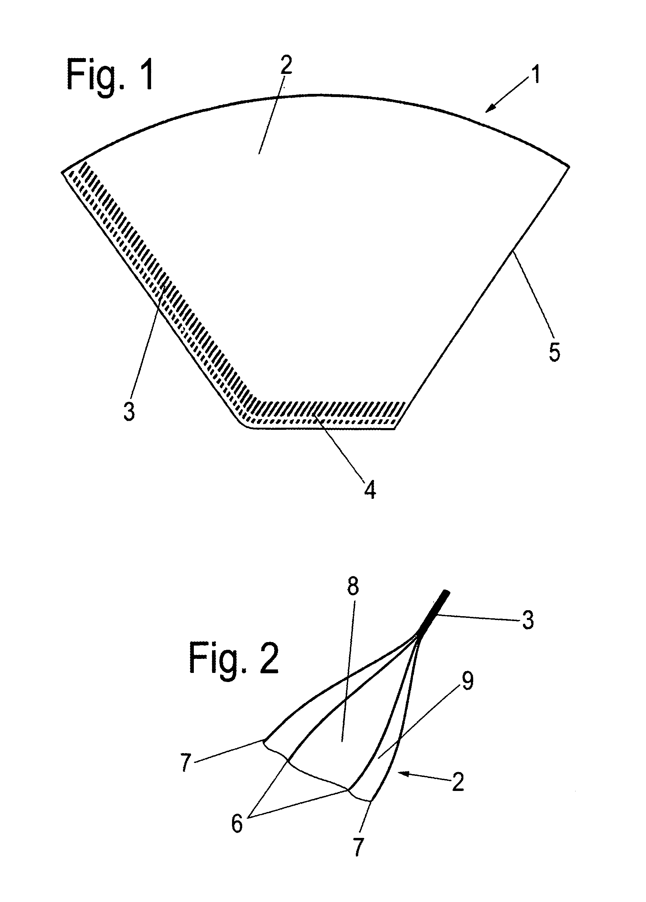

In Figur 2 ist der Bereich des Filterpapiereinsatzes benachbart zu der Seitennaht 3 dargestellt. Die Seitenwände 2 umfassen jeweils zwei Lagen 6 und 7 aus Filtermaterial, die an der Seitennaht 3 und der Bodennaht 4 miteinander verbunden sind. Die Lage 6 aus Filtermaterial bildet somit einen Innenfilter aus, der von der Lage 7 umgeben ist.

Der Filterpapereinsatz 1 kann so befüllt werden, dass ein Innenraum 8 befüllt wird, so dass die Flüssigkeit durch beide Lagen 6 und 7 aus Filtermaterial durchströmen muss. Die Lagen 6 und 7 aus Filtermaterial bestimmen den Strömungswiderstand und die Filterzeit.

Alternativ kann der Benutzer die Lage 6 aus Filtermaterial auf die benachbarte Lage 6 aus Filtermaterial umklappen, so dass nun ein Innenraum 9 zwischen der Lage 6 aus Filtermaterial und der Lage 7 aus Filtermaterial zur Befüllung offen ist. Dadurch sind in dem gezeigten Ausführungsbeispiel auf einer Seite die beiden Lagen 6 aus Filtermaterial und eine äußere Lage 7 aus Filtermaterial angeordnet, während an der gegenüberliegenden Seitenwand 2 nur die äußere Lage 7 aus Filtermaterial vorgesehen ist. Dann verringert sich der Strömungswiderstand auf der Seite mit nur einer Lage 7 aus Filtermaterial und die Filterzeit kann dadurch verkürzt werden, was auch bei bestimmten Einsatzzwecken zur Geschmacksverbesserung beiträgt.

In dem dargestellten Ausführungsbeispiel sind die Lagen 6 und 7 aus Filtermaterial gleich groß ausgebildet und an der Seitennaht 3 und der Bodennaht 4 miteinander verbunden. Es ist natürlich auch möglich, die Lage 6 aus Filtermaterial kleiner auszubilden als die Lage 7 aus Filtermaterial, so dass sich unterschiedliche Befüllungsvolumina ergeben. Zudem können die Lagen 6 und 7 aus Filtermaterial aus unterschiedlichen Materialien gebildet sein, beispielsweise als Grobfilter und Feinfilter. Die Lagen 6 und 7 aus Filtermaterial können zudem Markierungen aufweisen, die dem Benutzer den Befüllungsvorgang erläutern.

## Patentansprüche

1. Filterpapiereinsatz (1), insbesondere für Kaffee, mit einem befüllbaren Innenraum (8), der von Seitenwänden (2) umgeben ist, **dadurch gekennzeichnet, dass** die Seitenwände (2) mindestens zwei Lagen (6, 7) aus Filtermaterial aufweisen.

2. Filterpapiereinsatz nach Anspruch 1, **dadurch gekennzeichnet, dass** die Lagen (6, 7) an einer Naht (3, 4) miteinander fest verbunden sind.

3. Filterpapiereinsatz nach Anspruch 2, **dadurch gekennzeichnet, dass** die Lagen (6, 7) aus Filtermaterial außerhalb der Naht (3, 4) lose aufeinander liegen.

4. Filterpapiereinsatz nach einem der Ansprüche 1 bis 3, **dadurch gekennzeichnet, dass** die Lagen (6, 7) aus Filtermaterial aus unterschiedlichen Materialien gebildet sind.

5. Filterpapiereinsatz nach einem der Ansprüche 1 bis 4, **dadurch gekennzeichnet, dass** zwei Lagen (6, 7) aus Filtermaterial vorgesehen sind.

6. Filterpapiereinsatz nach einem der Ansprüche 1 bis 5, **dadurch gekennzeichnet, dass** die innere Lage (6) aus Filtermaterial dünner ausgebildet ist als die äußere Lage (7) aus Filtermaterial.

7. Filterpapiereinsatz nach einem der Ansprüche 1 bis 6, **dadurch gekennzeichnet, dass** die Lagen (6, 7) aus Filtermaterial als Grobfilter und Feinfilter ausgebildet sind.

8. Filterpapiereinsatz nach einem der Ansprüchel bis 7, **dadurch gekennzeichnet, dass** die Lagen (6, 7) aus Filtermaterial aus unterschiedlichen Filterpapieren gebildet sind.

## Claims

1. Filter paper insert (1), particularly for coffee, with a fillable interior space (8) surrounded by side walls (2), **characterised in that** the side walls (2) comprise at least two layers (6, 7) of filter material.

2. Filter paper insert according to claim 1, **characterised in that** the layers (6, 7) are fixedly connected together at a seam (3, 4).

3. Filter paper insert according to claim 2, **characterised in that** the layers (6, 7) of filter material lie loosely one on the other outside the seam (3, 4).

4. Filter paper insert according to any one of claims 1 to 3, **characterised in that** the layers (6, 7) of filter material are formed from different materials.

5. Filter paper insert according to any one of claims 1 to 4, **characterised in that** two layers (6, 7) of filter material are provided.

6. Filter paper insert according to any one of claims 1 to 5, **characterised in that** the inner layer (6) of filter material is formed to be thinner than the outer layer (7) of filter material.

7. Filter paper insert according to any one of claims 1 to 6, **characterised in that** the layers (6, 7) of filter material are formed as a coarse filter and fine filter.

8. Filter paper insert according to any one of claims 1 to 7, **characterised in that** the layers (6, 7) of filter material are formed from different filter papers.

## Revendications

1. Garniture en papier filtre (1) en particulier pour du café comportant un volume intérieur (8) pouvant être rempli qui est entouré de parois latérales (2),
**caractérisée en ce que**
les parois latérales (2) comportent au mois deux couches (6, 7) de matériau filtrant.

2. Garniture en papier filtre conforme à la revendication 1,
**caractérisée en ce que**
les couches (6, 7) sont reliées solidairement l'une à l'autre au niveau d'une soudure (3, 4).

3. Garniture en papier filtre conforme à la revendication 2,
**caractérisée en ce que**
les couches (6, 7) de matériau filtrant s'appliquent librement l'une contre l'autre à l'extérieur de la soudure (3, 4).

4. Garniture en papier filtre conforme à l'une des revendications 1 à 3,
**caractérisée en ce que**
les couches (6, 7) de matériau filtrant sont formées de matériaux différents.

5. Garniture en papier filtre conforme à l'une des revendications 1 à 4,
**caractérisée en ce qu'**
il est prévu deux couches (6, 7) de matériau filtrant.

6. Garniture en papier filtre conforme à l'une des revendications 1 à 5,
**caractérisée en ce que**
la couche interne (6) de matériau filtrant est plus mince que la couche externe (7) de matériau filtrant.

7. Garniture en papier filtre conforme à l'une des revendications 1 à 6,
**caractérisée en ce que**
les couches (6, 7) de matériau filtrant sont réalisées sous la forme d'un filtre grossier et d'un filtre fin.

8. Garniture en papier filtre conforme à l'une des revendications 1 à 7,
**caractérisée en ce que**
les couches (6, 7) de matériau filtrant sont formées de papiers filtre différents.
